# EUROPÄISCHE PATENTANMELDUNG

(11) **EP 0 599 001 A1**
(43) Veröffentlichungstag der Anmeldung: **01.06.1994**
(21) Anmeldenummer: 93114548.6
(22) Anmeldetag: 10.09.1993
(51) Int. Cl.: G03C 3/00, G03B 17/26

(54) **Licht-undurchlässig verpackte Spule mit lichtempfindlichem Material und Verfahren zur Herstellung**

(30) Priorität: 20.11.1992 CH 3574/92
(71) Anmelder: TYPON AKTIENGESELLSCHAFT FÜR PHOTOGRAPHISCHE INDUSTRIE, CH-3400 Burgdorf (CH)
(72) Erfinder: Fehr, Roland C., CH-9230 Flawil (CH)
(74) Vertreter: EGLI-EUROPEAN PATENT ATTORNEYS

(57) **Zusammenfassung**

Eine licht-undurchlässig verpackte Spule (1) mit lichtempfindlichem Material verwendet einen Spulenkern (2), zwei an den Stirnseiten der Spule (1) mittels einer Haftklebebeschichtung befestigte Seitenflansche (3, 4), einen Umhüllungsteil (5) und flexible Verschlussbänder (6, 7), die in elastisch gedehntem Zustand an den Kantenbereichen auf dem Umhüllungsteil (5) und auf den Seitenflanschen (3, 4) angebracht sind und die letzteren licht-undurchlässig miteinander verbinden. Der Vorteil besteht darin, dass an den Verschlussbändern 6, 7 beim Aufbringen praktisch keine Falten entstehen, und dass deswegen das Abspulen des Filmes nicht durch Reibung behindert wird. Die Verschlussbänder (6, 7) können zusätzlich in Umfangrichtung verlaufende, als Sollreissstellen ausgebildete Schwächungslinien (9) aufweisen, die im Kantenbereich auf dem Umhüllungsteil (5) oder auf den Seitenflanschen (3, 4) liegen und die eine kontrollierte Auftrennung der licht-undurchlässigen Ummantelung der Spule (1) erlauben, wenn dieselbe mit Hilfe der Lasche 8, die am Umhüllungsteil (5) angebracht ist, aufgerissen wird.

## Beschreibung

Die Erfindung betrifft eine licht-undurchlässig verpackte Spule mit lichtempfindlichem Material gemäss dem Oberbegriff des Anspruches 1 und ein Verfahren zur Herstellung.

Licht-undurchlässig verpackte Spulen mit lichtempfindlichem Material, die sich für das Laden von Geräten bei Tageslicht eignen, sind in einer Anzahl von Ausführungen bereits bekannt. Das Laden bezw. Einsetzen von Filmen oder lichtempfindlichen Papieren muss in den Räumen erfolgen können, in denen die betreffenden Geräte aufgestellt oder gebraucht sind, weshalb man auch von Raumladungsverpackungen für lichtempfindliche Materialien spricht. Die gängigen Verpackungen dieser Art haben den Nachteil, dass die verwendeten Seitenflansche die Spule seitlich oder im Durchmesser überragen und deshalb in der Filmkassette streifen, wodurch das Abspulen des lichtempfindlichen Materiales behindert wird, dass ferner beim Abziehen des licht-undurchlässigen Umhüllungsteiles vielfach losgerissene Teile der Verpackung in den Filmkassetten zurückbleiben und diese verschmutzen oder sogar Störungen verursachen, und dass der Anfang des Umhüllungsteils oft nur unbequem in den Auslass- bzw. Führungsschlitz der Filmkassette einzuführen und nur mit Mühe hindurchzuziehen ist.

EP-A-0230057 zeigt eine licht-undurchlässig verpackte Spule für lichtempfindliches Material mit kreisringförmigen Seitenflanschen, die den Spulendurchmesser überragen. Gleichzeitig überragt eine licht-undurchlässige Umhüllung, beispielsweise aus Polyäthylen, die Spulenbreite. Die äusseren Randbereiche der Seitenflansche und der Umhüllung sind nach aussen gefaltet und miteinander lichtdicht verschweisst. Die inneren Randbereiche der Seitenflansche sind licht-undurchlässig mit dem Spulenkern verbunden. Beim Abziehen der Umhüllung wird die Schweissverbindung zwischen Umhüllung und Seitenflanschen aufgerissen. Diese Verpackung hat den Nachteil, dass die Seitenflansche die Spule seitlich und im Durchmesser überragen und daher in der Filmkassette streifen. Die Spule wird deshalb beim Abspulen in der Filmkassette behindert. Ein weiterer Nachteil besteht darin, dass die Schweissverbindung zwischen Umhüllung und Seitenflanschen beim Abziehen der Umhüllung nicht kontrolliert und sauber getrennt wird. Dadurch besteht die Gefahr, dass Teile der Umhüllung in der Filmkassette zurückbleiben und Störungen verursachen.

Die US-4505387 zeigt eine licht-undurchlässig verpackte Spule für lichtempfindliches Material mit kreisringförmigen Seitenflanschen von gleichem Durchmesser wie der Spulendurchmesser. Eine licht-undurchlässige Umhüllung, beispielsweise aus einer beidseitig mit einem Polyesterfilm beschichteten Aluminiumfolie, ist auf dem Leaderteil oder direkt auf dem lichtempfindlichen Material angebracht, überlappt die Spulenbreite des lichtempfindlichen Materials und ist in den Randbereichen geschlitzt. Die derart in den Randbereichen gebildeten Zungen werden auf die Seitenflansche geklebt. Diese Verpackung hat den Nachteil, dass trotz der Schlitze in den Randbereichen Falten entstehen können, die in der Filmkassette streifen, was das Abspulen behindert. Beim Abziehen der Umhüllung wird dieselbe in den Randbereichen zerrissen, so dass die Zungen an den Seitenflanschen zurückbleiben. Bei dieser Verpackung besteht die Gefahr, dass die Umhüllung nicht in sauberen Linien entlang der Randbereiche abreisst, dass sich möglicherweise Verpackungsbestandteile losreissen, in der Filmkassette zurückbleiben und dieselbe verschmutzen, und dass das Abspulen des lichtempfindlichen Materiales dadurch behindert wird.

Die EP-A-0488738 zeigt eine weitere licht-undurchlässig verpackte Spule für lichtempfindliches Material mit kreisringförmigen Seitenflanschen, die den Spulendurchmesser überragen. Das lichtempfindliche Material wird von einer licht-undurchlässigen Umhüllung von im wesentlich gleicher Breite umschlossen. In den Randbereichen der Umhüllung sind Materialstreifen aus einem flexiblen, elastisch verformbaren, licht-undurchlässigen Material, beispielsweise aus Polyäthylen, befestigt und elastisch so über die vorstehenden Ränder der Seitenflanschen gedehnt und verformt, dass durch die entstehenden Adhäsionskräfte eine licht-undurchlässige Abdichtung der Randbereiche erfolgt. Dabei werden für die über die Seitenflanschen verformten Materialstreifen keine zusätzliche Massnahmen wie Kleben angewandt. Diese Verpackung hat den Nachteil, dass die Seitenflansche den Durchmesser der Spule überragen und daher beim Abrollen des lichtempfindlichen Materials im Inneren der Filmkassette häufig streifen und das Abrollen behindern. Ein weiterer Nachteil dieser Verpackung besteht darin, dass die Herstellung durch mehrere Arbeitsgänge erschwert ist, indem nämlich die Verschlussbänder zuerst auf die lichtundurchlässige Umhüllung aufgebracht werden und diese anschliessend um das lichtempfindliche Material der Spule gewickelt wird. Die Materialstreifen der Randbereichsabdichtungen werden beim Aufreissen von den Rändern der Seitenflansche abgestreift, bleiben jedoch mit der Umhüllung verbunden, so dass keine störenden Verpackungsrückstände im Filmbehälter zurückbleiben. Die die Spulenbreite überragende Breite des abgezogenen Umhüllungsteiles mit den daran befestigten Materialstreifen wirkt sich jedoch beim Durchschieben durch den Ausgabe- bzw. Führungsschlitz des Filmbehälters behindernd aus, da die bereits mehrfach abgekröpfte Vorverformung der Materialstreifen dies zusätzlich erschwert.

Aufgabe der Erfindung ist es, eine licht-undurchlässig verpackte Spule mit lichtempfindlichem Material der eingangs erwähnten Art zu schaffen, die die erwähnten Nachteile nicht aufweist und einfach herzustellen ist.

Diese Aufgabe wird durch die Kombination der im Patentanspruch 1 angegebenen Merkmale gelöst. Vorteilhafte Weiterbildungen der Erfindung ergeben sich aus den abhängigen Ansprüchen.

Die erfindungsgemässe Lösung verwendet flexible Verschlussbänder, die in elastisch gedehntem Zustand auf dem Umhüllungsteil befestigt werden.

Ein Vorteil der Erfindung besteht darin, dass die Verschlussbänder praktisch faltenfrei auf dem Umhüllungsteil, auf den Seitenflanschen und im Randbereich zwischen Umhüllungsteil und Seitenflanschen aufliegen und dass somit keine vorstehenden oder überstehenden Teile das Abspulen des lichtempfindlichen Materials in der Filmkassette durch Reibung behindern.

Ein weiterer Vorteil besteht darin, dass die Herstellung der Spule vereinfacht wird, da die Verschlussbänder in einem einzigen Arbeitsgang aufgebracht werden können.

Ein weiterer Vorteil der Erfindung besteht darin, dass Verschmutzung und das Verbleiben von störenden Verpackungsrückständen in der Filmkassette vermieden wird.

Ein weiterer Vorteil besteht darin, dass das Durchschieben des Umhüllungsteiles durch den Auslass- bzw. Führungsschlitz an der Filmkassette durch die nur geringfügig überstehende Breite des Umhüllungsteiles mit den daran befestigten Verschlussbändern kaum behindert wird.

Ein weiterer Vorteil besteht darin, dass die Spule mit lichtempfindlichem Material nach erfolgtem Laden des Gerätes teilweise rückspulbar ist.

Eine vorteilhafte Weiterbildung der Erfindung ergibt sich durch die Einführung von Schwächungslinien zur kontrollierten Trennung der Verschlussbänder. Dadurch kann unter Beibehaltung der bisher genannten Vorteile zusätzlich erreicht werden, dass beim Abziehen des Umhüllungsteiles durch den Auslassschlitz der Filmkassette keine weiteren Behinderungen durch Verklemmen etc. auftreten.

Licht-undurchlässig verpackte Spulen, deren Verpackung Schlitze aufweist, die beim Abziehen des Umhüllungsteiles als Einreissstellen dienen, sind in einer einfachen Form aus der US-4148395 bekannt. Die Schlitze sind an den Rändern der Seitenflansche angebracht. Die Seitenflansche überragen ihrerseits den Spulendurchmesser, sind über den Umhüllungsteil gefaltet und daran festgeklebt. Auf diese Weise erleichtern die Schlitze wohl das seitliche Einreissen beim Abziehen des Umhüllungsteils, gewährleisten aber nicht das kontrollierte und saubere Abtrennen in Umfangsrichtung. Separate Verschlussbänder werden bei dieser Lösung nicht verwendet.

Ein Ausführungsbeispiel der Erfindung wird nachstehend anhand der Zeichnungen näher erläutert. Es zeigen:
- Fig. 1: eine licht-undurchlässige Verpackung,
- Fig. 2: einen Teilquerschnitt durch eine lichtundurchlässige Verpackung,
- Fig. 3: eine Teilansicht einer licht-undurchlässigen Verpackung, und
- Fig. 4: ein Teilquerschnitt durch den Umhüllungsteil einer licht-undurchlässigen Verpackung.

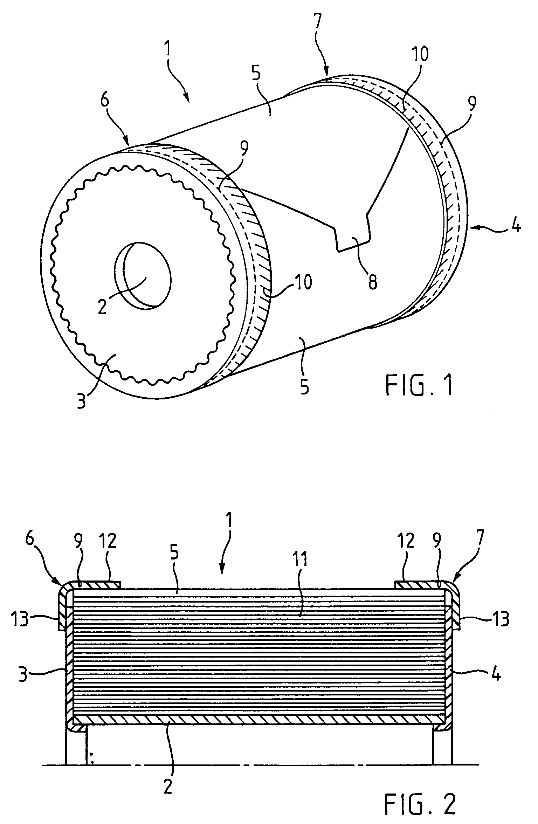

Figur 1 zeigt eine licht-undurchlässig verpackte Spule 1 mit lichtemfindlichem Material, mit einem lichtundurchlässigen Spulenkern 2, beidseitig an den Stirnseiten der Spule 1 angebrachten, ringförmigen, lichtundurchlässigen Seitenflanschen 3 und 4, einem lichtundurchlässigen Umhüllungsteil 5, der eine Ummantelung für das lichtempfindliche Material bildet und ebenfalls lichtundurchlässigen, elastisch dehnbaren Verschlussbändern 6 und 7, die beidseits die Ummantelung licht-undurchlässig mit den Seitenflanschen 3, 4 verbinden. Der Umhüllungsteil 5 weist eine Lasche 8 auf, mit deren Hilfe die lichtundurchlässige Ummantelung aufgerissen und der Umhüllungsteil 5 abgezogen werden kann.

Die Verschlussbänder 6, 7 können in Umfangrichtung verlaufende, als Sollreissstellen wirkende Schwächungslinien 9 aufweisen, sowie eine Vielzahl von weiteren Schwächungslinien 10, die schräg zur Umfangrichtung verlaufen und die den Beginn des Abziehens des Umhüllungsteiles 5 von der Spule erleichtern. Fig. 1 zeigt Schwächungslinien 9, die auf dem Umhüllungsteil 5 liegen, es können aber ebensogut auch Lösungen verwendet werden, bei denen die Schwächungslinien 9 auf den Seitenflanschen (3, 4) liegen (nicht dargestellt). Schwächungslinien dieser Art können beispielsweise Perforationen, Schlitze, Einkerbungen oder dergleichen sein. Die Verschlussbänder 6, 7 sind ausserdem vorzugsweise mit einer Selbstklebeschicht versehen.

Ein Teilquerschnitt gemäss Figur 2 zeigt den Aufbau der licht-undurchlässig verpackten Spule 1. Lichtempfindliches Material 11 ist auf dem Spulenkern 2 aufgespult und bildet so die im wesentlichen zylinderförmige Spule 1. Die beiden vorzugsweise aus Polyäthylen bestehenden Seitenflansche 3 und 4 sind an den Stirnseiten der Spule 1 angebracht und im Bereich des Spulenkerns 2 zu diesem hin abgekröpft. Damit werden die Seitenflansche 3, 4 gegenüber der Spulenachse zentriert und gleichzeitig licht-undurchlässig mit dem Spulenkern 2 verbunden. Diese Abkröpfung kann beispielsweise mittels Aufpressen oder thermischer Verformung erreicht werden. Die Seitenflansche 3, 4 sind im Aussendurchmesser geringfügig kleiner als die Spule 1. Die Seitenflansche 3, 4 weisen eine Haftklebebeschichtung auf, mit welcher sie an den Stirnseiten der Spule 1 haften. Es genügt, wenn auch nur Teile der Seitenflansche 3, 4 mit der Haftklebebeschichtung versehen sind.

Der Umhüllungsteil 5, der die licht-undurchlässige Ummantelung der Spule 1 bildet, hat im wesentlichen die gleiche Breite wie die Länge der Mantellinien der Spule 1. Die Verschlussbänder 6, 7 sind im Kantenbereich der Spule 1 zwischen dem Umhüllungsteil 5 und den Seitenflanschen 3, 4 angebracht und bewirken eine vollständige lichtundurchlässige Abdichtung. Jedes der Verschlussbänder 6, 7 ist in zwei Teilbereiche aufgeteilt, von denen ein erster Teilbereich 12 im wesentlichen auf dem Umhüllungsteil 5 und ein zweiter Teilbereich 13 im wesentlichen auf dem jeweiligen Seitenflansch 3, 4 aufliegt. Dabei ist der erste Teilbereich 12 des jeweiligen Verschlussbandes 6, 7 jeweils in gedehntem Zustand nicht abreissbar mit dem Umhüllungsteil 5 verbunden. Der zweite Teilbereich 13 des jeweiligen Verschlussbandes 6, 7 kann mit dem jeweiligen Seitenflansch 3, 4 verbunden sein, beispielsweise mittels einer Klebeverbindung. Es genügt aber auch, wenn der zweite Teilbereich unter Ausnützung von Adhäsionskräften lichtundurchlässig auf dem Seitenflansch aufliegt. Um die Faltenbildung im zweiten Teilbereich 13 zu verhindern oder mindestens sehr gering zu halten wird der zweite Teilbereich 13 möglichst klein gehalten. Es hat sich gezeigt, dass eine vollständige Ueberlappung im Bereich von 3 bis 5 mm der Verschlussbänder 6, 7 mit den Seitenflanschen 3, 4 zur Bildung der zweiten Teilbereiche 13 selbst bei grossen Spulen (Durchmesser im Bereich von 10 cm) genügt.

Werden Schwächungslinien 9 verwendet, so ist der zweite Teilbereich 13 nicht abreissbar mit dem jeweiligen Seitenflansch 3, 4 verbunden, beispielsweise mit einer Klebeverbindung. Der erste und der zweite Teilbereich 12, 13 des jeweiligen Verschlussbandes 6, 7 sind entlang der jeweiligen Schwächungslinie 9 voneinander trennbar, wenn der Umhüllungsteil 5 mit Hilfe der Lasche 8 von der Spule 1 abgezogen wird. Die Schwächungslinien 9 sind an den Verschlussbänder 6. 7 jeweils so angebracht, dass sie beidseits entweder auf dem Umhüllungsteil 5 oder auf den Seitenflanschen (3, 4) in der Nähe des Randes liegen.

Die Verschlussbänder 6, 7 sind vorzugsweise lichtundurchlässige Polyäthylenklebbänder, deren Haftfähigkeit im Bereich von 7 - 8 g/mm² liegt.

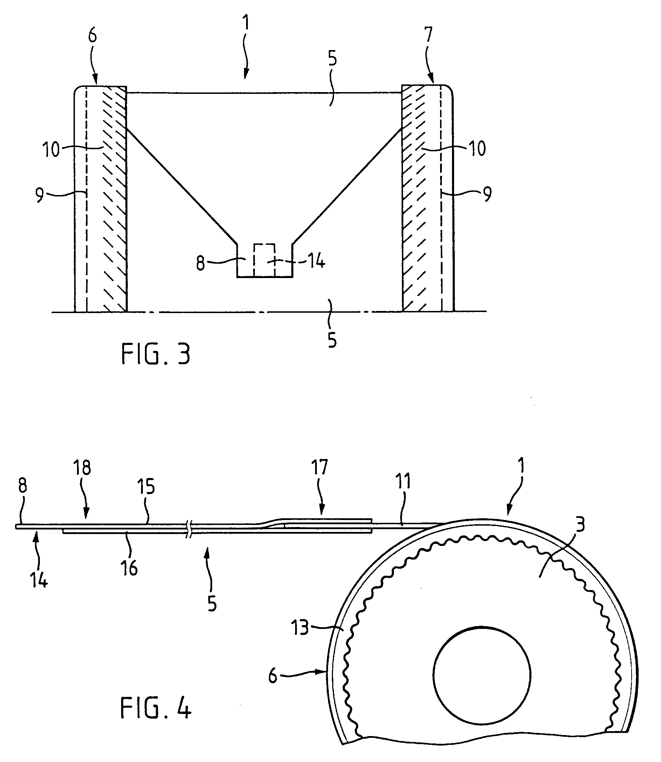

Figur 3 zeigt die Anordnung der Verschlussbänder 6, 7 an einem Ausführungsbeispiel (vergleiche auch Fig. 1 und 2), das mit Schwächungslinien 9 auf dem Umhüllungsteil 5 versehen ist. Dabei verlaufen die Schwächungslinien 9 im Randbereich auf dem Umhüllungsteil 5 in Umfangsrichtung. Die weiteren Schwächungslinien 10 verlaufen schräg zu den Schwächungslinien 9 in die Richtung, in die der Umhüllungsteil 5 mit Hilfe der Lasche 8 abgezogen wird, reichen allerdings nicht ganz bis zu den Schwächungslinien 9. Bei Ausführungsbeispielen die keine Schwächungslinien verwenden (nicht dargestellt), sind die Verschlussbänder 6, 7 genau gleich angebracht, es sollte dann allerdings vorteilhaft darauf geachtet werden, dass die Enden der Verschlussbänder 6, 7 im Bereich der Lasche 8 liegen, damit das Abziehen des Umhüllungsteiles 5 nicht erschwert wird.

Der Umhüllungsteil 5 ist so lang, dass er sich selbst auf dem Umfang der Spule 1 zu überdecken vermag und ist im Bereich der Lasche 8 mit einer Klebestelle, die als Freilassbereich 14 ausgestaltet ist, versehen (siehe dazu auch Figur 4). An der Klebestelle wird der Umhüllungsteil 5 auf sich selber befestigt.

Figur 4 zeigt den Umhüllungsteil 5 und dessen Verbindung mit dem lichtempfindlichen Material 11 der Spule 1 im Detail. Der Umhüllungsteil ist ein Schichtverbund aus einer äusseren und einer inneren Schicht 15, 16, die aneinander haften und zwischen denen in einem Endbereich 17 das lichtempfindliche Material 11 befestigt ist. Die äussere Schicht 15 besteht vorzugsweise aus einem Selbstklebematerial, z.B. aus einem Selbstklebepapier. Die innere Schicht 16 besteht vorzugsweise aus einem silikonisierten Material, z.B. aus einem Silikonpapier, das auf dem Selbstklebematerial haftet. Wird Selbstklebepapier verwendet, so ist es natürlich beliebig bedruckbar. An einem anderen Endbereich 18 verjüngt sich der Umhüllungsteil 5 zunehmend zu der Lasche 8 hin (siehe Figur 1 und Figur 3) und weist im Bereich derselben den Freilassbereich 14 auf, eine Stelle, an der das silikonisierte Material, bzw. die innere Schicht 16, fehlt.

Die Verschlussbänder 6, 7 weisen an ihren Rändern im zweiten Teilbereich 13, der auf dem jeweiligen Seitenflansch 3, 4 aufliegt, eine gezackte oder gewellte Form auf. Diese Formgebung begünstigt ein faltenfreies Aufliegen der Verschlussbänder 6, 7 auf den jeweiligen Seitenflanschen 3, 4. Dies kann besonders bei eng tolerierten Filmkassetten das Einsetzen und Abrollen der Spulen erheblich erleichtern, da keine unnötige Reibung wegen Faltenbildung entsteht.

Die Verschlussbänder 6, 7 werden auf der ummantelten Spule im Kantenbereich zwischen dem Umhüllungsteil 5 und den Seitenflanschen 3, 4 in einem einzigen Arbeitsgang aufgebracht. Vor dem Aufbringen werden die Verschlussbänder 6, 7 elastisch gedehnt. Die ersten Teilbereiche 12 der Verschlussbänder 6, 7 werden in elastisch gedehntem Zustand auf dem Umhüllungsteil 5 befestigt, beispielsweise durch Kleben. Die ebenfalls elastisch gedehnten zweiten Teilbereiche 13 werden auf die jeweiligen Seitenflanschen 3, 4 aufgelegt. Dabei können die zweiten Teilbereiche 13 mit einer leicht lösbaren Haftklebeschicht auf den Seitenflanschen 3, 4 befestigt werden. Eine Haftklebebeschichtung der zweiten Teilbereiche 13 ist jedoch nicht unbedingt notwendig, da das gedehnte Material der Verschlussbänder mit seiner Rückstellkraft an den Rändern der Seitenflanschen 3, 4 eine formschlüssige Verbindung eingeht, wobei die auftretenden Adhäsionskräfte zwischen den Verschlussbändern 6, 7 und den Seitenflanschen 3, 4 einen lichtdichten und verschiebungssicheren Abschluss bilden. Das Aufbringen der Verschlussbänder 6, 7 in gedehntem Zustand bewirkt, dass diese in den ersten Teilbereichen 12, im Kantenbereich und in den zweiten Teilbereichen 13 praktisch faltenfrei aufliegen, da die Rückstellkräfte weitgehend verhindern, dass Falten überhaupt auftreten.

Die Verschlussbänder 6, 7 bestehen, wie bereits erwähnt, aus einem flexiblen Material das elastisch dehnbar ist. Dazu kann beispielsweise Polyäthylen (PE) verwendet werden. Die Verschlussbänder 6, 7 sind ausserdem vorteilhaft so dünn und flexibel, dass sie mühelos mitsamt dem Umhüllungsteil 5 aus dem Auslass- bzw. Führungsschlitz der Filmkassette gezogen werden können. Die beim Aufbringen angewendete Dehnung der Verschlussbänder 6, 7 liegt vorzugsweise im Bereich von 5 bis 15 Prozent. Geeignete Kombinationen von Elastizitätseigenschaften bei elastisch dehnbaren Materialien und angewendeter Dehnung liegen vorzugsweise in einem Bereich, der lediglich etwa 10 Prozent bleibende Formänderung gestattet.

Wird eine licht-undurchlässig verpackte Spule 1 mit lichtempfindlichem Material, die nicht mit Schwächungslinien 9 auf dem Umhüllungsteil 5 (vergl. Fig. 3) versehen ist, an der Lasche 8 aufgerissen, so genügt diese Kraft, um die Verschlussbänder 6, 7, die nur leichthaftend oder von Adhäsionskräften gehalten an den Seitenflanschen 3, 4 befestigt sind, von den Seitenflanschen 3, 4 zu lösen und mitsamt dem Umhüllungsteil 5 abzuziehen. Da die Verschlussbänder 6, 7 nicht abreissbar mit dem Umhüllungsteil 5 verbunden sind, bleiben keine Verschlussbandteile an der Spule oder in der Filmkassette zurück. Da der Umhüllungsteil 5 mit den Verschlussbändern 6, 7 in der Breite zwar die Breite des Auslass- bzw. Führungsschlitzes der Filmkassette überragt, die Verschlussbänder 6, 7 jedoch dünn und leicht verformbar sind, lässt sich der Umhüllungsteil mit den Verschlussbändern 6, 7 auch leicht in den Führungsschlitz einführen und durchziehen.

Wird hingegen eine licht-undurchlässig verpackte Spule 1 mit lichtempfindlichem Material, die mit Schwächungslinien 9 auf dem Umhüllungsteil 5 (vergl. Fig. 3) versehen ist, an der Lasche 8 aufgerissen, so erleichtern die weiteren Schwächungslinien 10 das Einreissen der Verschlussbänder 6, 7, und die in Umfangrichtung verlaufenden Schwächungslinien 9 gewährleisten die kontrollierte Auftrennung der lichtundurchlässigen Ummantelung. Beim Abziehen des Umhüllungsteils 5 von der Spule 1 werden die Ränder der an den Seitenflanschen 3, 4 zurückbleibenden Verschlussbandteile 6, 7 radial von der Spule 1 weggebogen und bleiben wegen der Ueberdehnung hernach plastisch verformt in dieser Lage. Sie stören somit das weitere Abspulen des lichtempfindlichen Materials nicht mehr. Dies ist von Bedeutung, da die photographischen Eigenschaften von Filmen oder anderem lichtempfindlichem Material durch abgestreifte Klebemittelrückstände beeinträchtigt werden können, was auf diese Weise weitgehend verhindert wird. Selbstverständlich können auch Verschlussbänder 6, 7 verwendet werden bei denen in der unmittelbaren Umgebung der Schwächungslinie 9 kein Klebstoff aufgetragen ist.

Die Verschlussbänder 6, 7 können, wie bereits erwähnt, aufgeklebt sein, es sind jedoch auch andere Befestigungsarten anwendbar, beispielsweise Punktschweissen oder ähnliche Verfahren, sofern die Verschlussbänder 6, 7 wie auch der Umhüllungsteil 5 aus dazu geeigneten Materialien bestehen.

## Patentansprüche

1. Licht-undurchlässig verpackte Spule (1) mit lichtempfindlichem Material (11) mit:
- einem licht-undurchlässigen Spulenkern (2) zum Aufspulen von lichtempfindlichem Material (11) unter Bildung einer im wesentlichen zylinderförmigen Spule (1) mit einer Mantelfläche mit Mantellinien von vorgegebener Länge und zwei rechtwinklig dazu angeordneten Stirnseiten,
- ringförmigen licht-undurchlässigen Seitenflanschen (3, 4), die beidseitig an den Stirnseiten der Spule (1) angebracht sind,
- einer licht-undurchlässigen Umhüllung für die Mantelfläche der Spule (1), bestehend aus
- einem Umhüllungsteil (5) mit im wesentlich gleicher Breite wie die Länge der Mantellinien der Spule (1), wobei der Umhüllungsteil (5) über die Spule (1) aufgespult ist, eine lichtundurchlässige Ummantelung für die Spule (1) bildet und in einem Endbereich (17) mit dem lichtempfindlichen Material (11) verbunden ist,
- licht-undurchlässigen Verschlussbändern (6, 7), die beidseits die Ummantelung in einem Kantenbereich zwischen Umhüllungsteil (5) und Seitenflanschen (3, 4) lichtundurchlässig mit den Seitenflanschen (3, 4) verbinden, wobei jedes Verschlussband (6, 7) zwei Teilbereiche aufweist, von denen ein erster Teilbereich (12) im wesentlichen auf dem Umhüllungsteil (5) lichtdicht aufliegt und nicht abreissbar mit demselben verbunden ist und ein zweiter Teilbereich (13) im wesentlichen auf dem jeweiligen Seitenflansch (3, 4) lichtdicht aufliegt, wobei die Verschlussbänder (6, 7) aus einem flexiblen Material bestehen,
**dadurch gekennzeichnet, dass**
der erste Teilbereich (12) jedes Verschlussbandes (6, 7) in elastisch gedehntem Zustand auf dem Umhüllungsteil (5) befestigt ist.

2. Licht-undurchlässig verpackte Spule (1) mit lichtempfindlichem Material (11) nach Anspruch 1, **dadurch gekennzeichnet, dass** der zweite Teilbereich (13) des Verschlussbandes (5) mit dem Seitenflansch (3, 4) verbunden ist, beispielsweise durch Haftung mittels eines Klebers.

3. Licht-undurchlässig verpackte Spule (1) mit lichtempfindlichem Material (11) nach Anspruch 1 oder 2, **dadurch gekennzeichnet, dass** der zweite Teilbereich (13) des Verschlussbandes (6, 7) nicht abreissbar mit dem jeweiligen Seitenflansch (3, 4) verbunden ist und jedes Verschlussband (6, 7) eine in einem Kantenbereich zwischen Umhüllungsteil (5) und Seitenflansch (3, 4) in Umfangrichtung verlaufende, als Sollreissstelle wirkende Schwächungslinie (9) aufweist und dass der erste und der zweite Teilbereich (12, 13) der Verschlussbänder (6, 7) entlang der Schwächungslinie (9) voneinander trennbar sind, wenn der Umhüllungsteil (5) mit den ersten Teilbereichen (12) der Verschlussbänder (6, 7) von der Spule (1) abgezogen wird.

4. Licht-undurchlässig verpackte Spule (1) mit lichtempfindlichem Material (11) nach Anspruch 3, **dadurch gekennzeichnet, dass** die Schwächungslinie (9) auf dem Umhüllungsteil (5) liegt.

5. Licht-undurchlässig verpackte Spule (1) mit lichtempfindlichem Material (11) nach Anspruch 3, **dadurch gekennzeichnet, dass** die Schwächungslinie (9) auf dem Seitenflansch (3, 4) liegt.

6. Licht-undurchlässig verpackte Spule (1) mit lichtempfindlichem Material (11) nach Anspruch 4, **dadurch gekennzeichnet, dass** der zweite Teilbereich (13) im Bereich der Schwächungslinie (9) beim Abziehen des Umhüllungsteiles (5) plastisch verformbar ist, damit er sich beim Abziehen des Umhüllungsteiles (5) radial von der Spule (1) wegbiegt und somit das Abspulen des lichtempfindlichen Materiales (11) nicht stört.

7. Licht-undurchlässig verpackte Spule (1) mit lichtempfindlichem Material (11) nach einem der Ansprüche 1 bis 6, **dadurch gekennzeichnet, dass.** die Seitenflansche (3, 4) im Bereich des Spulenkernes (2) zu diesem hin abgekröpft sind, um sie bezüglich der Spulenachse zu zentrieren und licht-undurchlässig mit dem Spulenkern (2) zu verbinden, und dass sie eine Haftklebebeschichtung aufweisen, mit welcher sie an den Stirnseiten der Spule (1) haften.

8. Licht-undurchlässig verpackte Spule (1) mit lichtempfindlichem Material (11) nach einem der Ansprüche 1 bis 7, **dadurch gekennzeichnet, dass** die Seitenflansche (3, 4) einen Aussendurchmesser aufweisen, der unwesentlich kleiner ist als der Aussendurchmesser der Spule (1).

9. Licht-undurchlässig verpackte Spule (1) mit lichtempfindlichem Material (11) nach einem der Ansprüche 1 bis 8, **dadurch gekennzeichnet, dass** die Seitenflansche (3, 4) aus Polyäthylen bestehen.

10. Licht-undurchlässig verpackte Spule (1) mit lichtempfindlichem Material (11) nach einem der Ansprüche 1 bis 9, **dadurch gekennzeichnet, dass** die Verschlussbänder (6, 7) lichtundurchlässige Polyäthylenklebbänder sind, deren Haftfähigkeit im Bereich von 7 - 8 g/mm² liegt.

11. Licht-undurchlässig verpackte Spule (1) mit lichtempfindlichem Material (11) nach Anspruch 4 oder 6, **dadurch gekennzeichnet, dass** die Verschlussbänder (6, 7) so angebracht sind, dass die in Umfangrichtung verlaufenden Schwächungslinien (9) beidseits auf dem Umhüllungsteil (5) in der Nähe dessen Randes liegen.

12. Licht-undurchlässig verpackte Spule (1) mit lichtempfindlichem Material (11) nach einem der Ansprüche 3 bis 6, **dadurch gekennzeichnet, dass** die Verschlussbänder (6, 7) in den ersten Teilbereichen (12) als Sollreisstellen wirkende, schräg zu der in Umfangrichtung verlaufenden Schwächungslinie (9) verlaufende weitere Schwächungslinien (10) aufweisen, die den Beginn des Abziehens des Umhüllungsteiles (5) von der Spule (1) erleichtern.

13. Licht-undurchlässig verpackte Spule (1) mit lichtempfindlichem Material (11) nach einem der Ansprüche 1 bis 12, **dadurch gekennzeichnet, dass** die Verschlussbänder (6, 7) an ihren Rändern im zweiten Teilbereich (13) eine gezackte oder gewellte Form aufweisen, um eine im wesentlichen faltenfreie Haftung an den Seitenflanschen (3, 4) zu ermöglichen.

14. Licht-undurchlässig verpackte Spule (1) mit lichtempfindlichem Material (11) nach Anspruch 1, **dadurch gekennzeichnet, dass** der Umhüllungsteil (5) ein aus einer inneren und einer äusseren Schicht (16, 15) bestehender Schichtverbund ist und dass die Befestigung des lichtempfindlichen Materials (11) zwischen der inneren und der äusseren Schicht (16, 15) erfolgt.

15. Licht-undurchlässig verpackte Spule (1) mit lichtempfindlichem Material (11) nach Anspruch 14, **dadurch gekennzeichnet, dass** die äussere Schicht (15) ein Selbstklebematerial und die innere Schicht (16) ein silikonisiertes Material ist, wobei das silikonisierte Material auf dem Selbstklebematerial haftet.

16. Licht-undurchlässig verpackte Spule (1) mit lichtempfindlichem Material (11) nach Anspruch 15, **dadurch gekennzeichnet, dass** zum genannten Endbereich (17) des Umhüllungsteiles (5) ein anderer Endbereich (18) vorgesehen ist, der sich vom erstgenannten Endbereich (17) zu einer Lasche (8) hin verjüngt, um die Führung des lichtempfindlichen Materiales (11) zu erleichtern, und dass im Bereich der Lasche (8) ein Freilassbereich (14) ohne silikonisiertes Material vorgesehen ist, damit der andere Endbereich (18) des Umhüllungsteiles (5) selbstklebend befestigbar ist.

17. Verfahren zur Herstellung einer licht-undurchlässig verpackten Spule (1) mit lichtempfindlichem Material (11) nach Anspruch 1, **dadurch gekennzeichnet, dass** die Verschlussbänder (6, 7) zum Aufbringen im Kantenbereich zwischen Umhüllungsteil (5) und Seitenflanschen (3, 4) auf der mit dem Umhüllungsteil (5) ummantelten Spule (1) elastisch gedehnt werden, dass die elastisch gedehnten ersten Teilbereiche (12) der Verschlussbänder (6, 7) auf dem Umhüllungsteil (5) befestigt werden, und dass die zweiten Teilbereiche (13) der Verschlussbänder (6, 7) auf die jeweiligen Seitenflansche (3, 4) aufgelegt werden.

18. Verfahren zur Herstellung einer licht-undurchlässig verpackten Spule (1) mit lichtempfindlichem Material (11) nach Anspruch 17, **dadurch gekennzeichnet, dass** die Dehnung der Verschlussbänder (6, 7) im Bereich von 5 bis 15 Prozent liegt.

19. Verfahren zur Herstellung einer licht-undurchlässig verpackten Spule (1) mit lichtempfindlichem Material (11) nach Anspruch 17 oder 18, **dadurch gekennzeichnet**, **dass** die Seitenflansche (3, 4) auf die Stirnseiten der Spule (1) aufgeklebt und mittels Aufpressen oder thermischer Verformung zum Spulenkern (2) hin ausgedehnt und abgekröpft werden.
